Europäisches Patentamt

European Patent Office

Office européen des brevets

(11) Veröffentlichungsnummer: **0 421 143 A2**

# (12) EUROPÄISCHE PATENTANMELDUNG

(21) Anmeldenummer: **90117222.1**

(22) Anmeldetag: **06.09.90**

(51) Int. Cl.⁵: **B21J 13/02, B21K 1/76**

(30) Priorität: **05.10.89 DE 3933292**

(43) Veröffentlichungstag der Anmeldung:
**10.04.91 Patentblatt 91/15**

(84) Benannte Vertragsstaaten:
**DE ES FR GB IT**

(71) Anmelder: **SCHÖNEWEISS & CO. GMBH**
**Delsterner Strasse 186**
**W-5800 Hagen(DE)**

(72) Erfinder: **Arendt, Gerd, Dipl.-Ing.**

**Kermelberg 41**
**W-5804 Herdecke(DE)**
Erfinder: **Klotzbier, Werner**
**Rüggeberger Strasse 49**
**W-5828 Ennepetal(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**W-8000 München 22(DE)**

(54) Spreizwerkzeug für eine Formungseinrichtung.

(57) Die Erfindung betrifft ein Spreizwerkzeug für eine Formungseinrichtung, insbesondere ein Schmiedegesenk, zur Herstellung hohler Werkstükke, mit einem Stempel und einer dessen freien Endabschnitt formschlüssig in einer Aufnahmeöffnung aufnehmenden Spreizhülse, die aus radial bewegbaren, durch Trennfugen getrennten Segmenten besteht und deren Außenkontur der Innenkontur des Werkstückes entspricht, wobei die Trennfugen von aneinander angrenzenden Begrenzungsflächen benachbarter Segmente gebildet sind.

Bei bekannten Spreizwerkzeugen sind die Segmente durch radial verlaufende Trennfugen voneinander getrennt, die sich beim Spreizen der Spreizhülse verbreitern, so daß während des Formungsvorganges plastisches oder flüssiges Werkstückmaterial eindringen kann.

Um eine Vergrößerung der Breite der Trennfugen zwischen den Segmenten während des Spreizens der Spreizhülse zu verhindern, ist erfindungsgemäß eine gerade Anzahl von wenigstens vier Segmenten (11, 12) vorgesehen, wobei die Trennfugenebenen außerhalb der Längsmittelachse der Spreizhülse (9) derart verlaufen, daß die Trennfugen (18) bei gespreizter Spreizhülse (9) im Bereich deren Außenkontur geschlossen sind.

FIG. 1

## SPREIZWERKZEUG FÜR EINE FORMUNGSEINRICHTUNG

Die Erfindung betrifft ein Spreizwerkzeug nach dem Oberbegriff des Anspruchs 1, das zur Herstellung hohler Werkstücke vorgesehen ist.

Aus der DE-PS 30 04 024 und der EP-A1-0 013 545 sind derartige Spreizwerkzeuge bekannt, deren Segmente durch radial verlaufende Trennfugen voneinander getrennt sind. Diese Trennfugen werden beim Spreizen der Spreizhülse zu Spalten verbreitert, in die während des Schmiedevorganges das plastische oder flüssige Werkstücksmaterial eindringt und an der Werkstück-Inntenkontur störende Grate hinterlassen kann, die durch eine spannende Nachbearbeitung entfernt werden müssen. Dies ist beispielsweise der Fall, wenn die Grate in den die Antriebskräfte übertragenden Kugeln aufnehmenden Aussparungen von äußeren Gelenkkörpern für homokinetische Gelenke von Kraftfahrzeugen angeordnet sind. Es wird jedoch angestrebt, hohle Werkstücke ohne störende Grate in der Innenkontur zu schmieden, so daß eine Werkstück-Nachbearbeitung zur Entfernung der Grate entfällt.

Es ist Aufgabe der Erfindung, eine Spreizhülse der eingangs genannten Art so weiterzubilden, daß sich die Breite der Trennfugen zwischen den Segmenten während des Spreizens der Spreizhülse nicht vergrößert.

Diese Aufgabe wird erfindungsgemäß durch das Kennzeichen des Anspruchs 1 gelöst. Die gerade Anzahl von wenigstens vier Segmenten und der Verlauf der Trennfugenebenen außerhalb der Längsmittelachse, d.h. nicht in radialer Richtung der Spreizhülse erlaubt es, die Trennfugen derart anzuordnen, daß sie sich während des Spreizens der Spreizhülse nicht öffnen und somit das Eindringen von Werkstückmaterial während des Schmiedens verhindern. Die Innenkontur der auf diese Weise hergestellten Werkstücke ist frei von Graten und erfordert somit keine Nachbearbeitung.

Vorzugsweise ist jedes zweite Segment als inneres Segment zwischen jeweils zwei benachbarten äußeren Segmenten angeordnet, wobei die Trennfugen beiseits jedes inneren Segmentes bei Betrachtung des Spreizhülsen-Querschnitts parallel zueinander und entlang von inneren, der Aufnahmeöffnung zugewandten Begrenzungsflächen der jeweils benachbarten äußeren Segmente verlaufen und diese inneren Begrenzungsflächen unter Bildung je einer Nut zur Aufnahme der inneren Segmente bei ungespreizter Spreizhülse zurückgesetzt sind. Dabei kann der Nutgrund zur Nutgrundmitte hin abfallend ausgebildet sein.

Gemäß einer Weiterbildung der Erfindung sind die inneren und die äußeren Segmente an der Formungseinrichtung radial verschiebbar befestigt.

Dabei können der Stempel und die Aufnahmeöffnung über ihre Gesamtlänge gleiche Querschnittsabmessungen aufweisen.

Um in diesem Fall die Spreizhülse spreizen zu können, ist jedes der inneren und der äußeren Segmente vorzugsweise mit einem daran angreifenden, durch eine Antriebseinrichtung radial verschiebbaren Betätigungsarm versehen. Dabei können die Betätigungsarme in Führungen in einer Matrize der Formungseinrichtung geführt sein.

Vorteilhafterweise sind die Führungsflächen der Führungen mit je einer die Radialbewegung der Segmente begrenzenden nutförmigen Aussparung und die Betätigungsarme mit je einem in der Aussparung einsitzenden seitlichen Vorsprung als Anschlag ausgebildet.

Zur Festlegung der Segmente im gespreizten Zustand der Spreizhülse ist es günstig, wenn jeder Betätigungsarm an seiner Oberseite eine Verriegelungsfeder oder -nut für den Eingriff mit einer Verriegelungsnut oder -feder einer der Matrize gegenüberliegenden stempelhalterung aufweist. Dabei können die Verriegelungsfedern oder -nuten sich kreisförmig über die gesamte Oberfläche der Matrize fortsetzen.

Vorzugsweise weisen der Stempel sowie die von den inneren Begrenzungsflächen der inneren und äußeren Segmente umschriebene Aufnahmeöffnung einen im wesentlichen rechteckigen Querschnitt auf.

Der Stempel und die Aufnahmeöffnung können sich in Richtung zum freien Stempelende verjüngen. Dadurch ist es möglich, das Spreizen der Segmente durch Eintauchen des Stempels in die Aufnahmeöffnung zu bewirken.

Nachstehend ist die Erfindung anhand eines bevorzugten Ausführungsbeispiels unter Bezugnahme auf die Zeichnung näher beschrieben. Es zeigen

Fig. 1 ein Schmiedegesenk mit einer Matrize und einem völlig gespreizten Spreizwerkzeug gemäß einem bevorzugten Ausführungsbeispiel der Erfindung im Schnitt entlang der Linie I-I in Fig. 2,

Fig. 2 eine Draufsicht der Matrize mit eingezeichneter Schnittdarstellung des Spreizwerkzeugs entlang der Linie II-II in Fig. 1,

Fig. 3 das Spreizwerkzeug in der Darstellung nach Fig. 2 im ungespreizten Zustand,

Fig. 4 das Spreizwerkzeug in der Darstellung nach Fig. 2 im teilgespreizten Zustand, und

Fig. 5 das Spreizwerkzeug in der Darstellung nach Fig. 2 im völlig gespreizten Zustand.

Das erfindungsgemäße Spreizwerkzeug dient zur Herstellung hohler Werkstücke 1 und im hier beschriebenen Ausführungsbeispiel zur Ausbildung der Hinterschneidung eines bereits vorgeschmiedeten äußeren Gelenkkörpers eines homokinetischen Gelenks für ein Kraftfahrzeug.

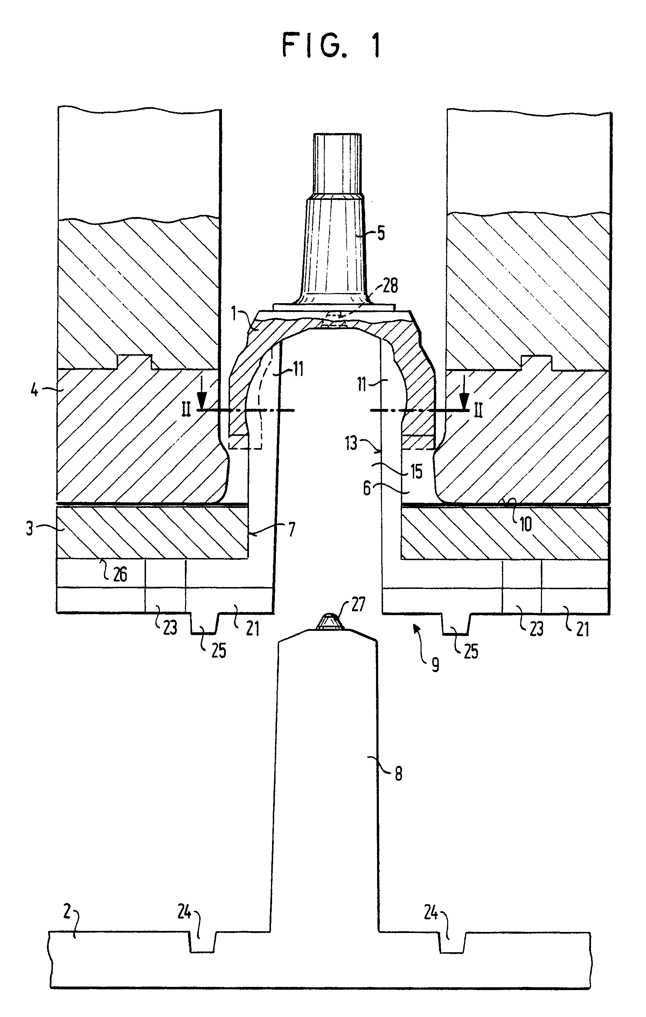

Das in Fig. 1 dargestellte Schmiedegesenk umfaßt eine Stempelhalterung 2, eine plattenförmig ausgebildete Matrize 3, einen Formring 4 und eine Werkstückshalterung 5. Die Stempelhalterung 2 und der Formring 4 sind unterhalb bzw. oberhalb der ortsfesten Matrize 3 angeordnet und gegenüber dieser auf- und abbewegbar. Die Matrize 3 weist eine zu der vom Formring 4 umschriebenen Öffnung 6 koaxiale Durchgangsöffnung 7 auf. Die Werkstückshalterung 5 ist koaxial zu den vorgenannten Öffnungen 6, 7 oberhalb der Matrize 3 auf- und abbewegbar angeordnet.

Das erfindungsgemäße Spreizwerkzeug umfaßt einen an der Stempelhalterung 2 angeformten Stempel 8 und eine Spreizhülse 9, die die Durchgangsöffnung 7 der Matrize 3 durchsetzt und über deren Oberseite 10 übersteht. Die Spreizhülse 9 besteht aus zwei inneren Segmenten 11 und zwei äußeren Segmenten 12, die abwechselnd mit den inneren Segmenten 11 angeordnet sind. Die inneren Segmente 11 und die äußeren Segmente 12 sind in radialer Richtung von einer ungespreizten in eine gespreizte Stellung und zurück verschiebbar. In letzterer Stellung umschreiben sie mit inneren Begrenzungsflächen 13 bzw. 14 eine durch die Spreizhülse 9 durchgehende, zur Durchgangsöffnung 7 der Matrize 3 koaxiale Aufnahmeöffnung 15 zur formschlüssigen Aufnahme des Stempels 8. Die Aufnahmeöffnung 15 und der Stempel 8 weisen jeweils einen sich in Richtung zum freien Stempelende schwach verjüngenden Verlauf sowie einen im wesentlichen rechteckigen Querschnitt auf. In ihrer gespreizten Stellung definieren die Segmente 11, 12 mit ihren der Durchgangsöffnung 7 der Matrize 3 abgewandten oberen Endbereichen eine Außenkontur, die der Innenkontur des herzustellenden Werkstücks 1, d.h. des äußeren Gelenkkörpers für das homokinetische Gelenk, entspricht. Dementsprechend ist die Außenkontur der Spreizhülse 9, abgesehen von der Unterbrechung durch die durchgehende Aufnahmeöffnung 15, im wesentlichen kugelförmig ausgebildet und weist in regelmäßigen Abständen nach außen gerichtete Vorsprünge 16 auf, die Ausnehmungen in der Innenkontur des äußeren Gelenkkörpers entsprechen. Diese Ausnehmungen sind zur Aufnahme von Antriebskräfte übertragenden Kugeln vorgesehen.

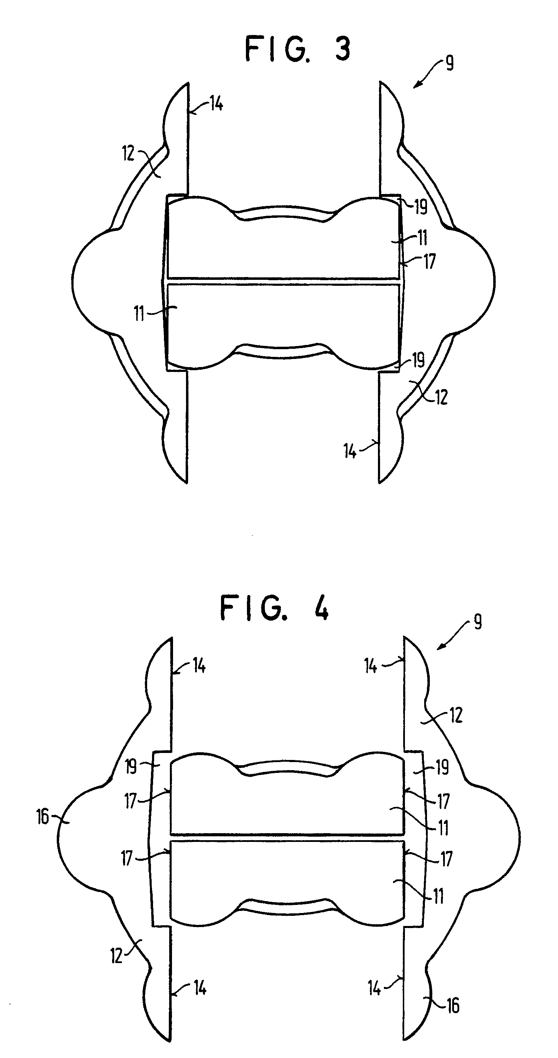

Wie insbesondere die Fig. 3 bis 5 zeigen, sind die inneren Segmente 11 zwischen den äußeren Segmenten 12 angeordnet und liegen mit seitlichen Begrenzungsflächen 17 an den inneren Begrenzungsflächen 14 der äußeren Segmente 12 an. Die inneren und die seitlichen Begrenzungsflächen 14, 17 bilden die die inneren Segmente 11 von den äußeren Segmenten 12 trennenden Trennfugen 18 der Spreizhülse 9. Diese Trennfugen 18 verlaufen bei Betrachtung des Spreizhülsen-Querschnitts parallel zueinander. Auf diese Weise bleiben die Begrenzungsflächen 14, 17 während der Radialbewegungen der Segmente 11, 12 zwischen der ungespreizten und der gespreizten Stellung in gegenseitiger Anlage, d.h. die Trennfugen 18 bleiben geschlossen und nehmen somit auch im gespreizten Zustand der Spreizhülse 9 kein flüssiges oder plastisches Werkstückmaterial auf.

Die inneren Begrenzungsflächen 14 der äußeren Segmente 12 sind in ihrem mittleren Bereich unter Bildung je einer Nut 19 zurückgesetzt. Die Nuten 19 weisen je einen zur Nutgrundmitte abfallenden Nutgrund 20 auf und dienen bei ungespreizter Stellung der Spreizhülse 9 zur Aufnahme der inneren Segmente 11.

Die Segmente 11, 12 sind an ihren freien unteren Enden mit je einem Betätigungsarm 21 versehen, der in je einer Führung an der Unterseite 26 der Matrize 3 durch eine Antriebseinrichtung (nicht gezeigt) radial verschiebbar ist. Die Führungsflächen dieser Führungen weisen je eine die Radialbewegung der Segmente 11, 12 begrenzende nutförmige Aussparung 22 auf, in der ein seitlicher Vorsprung 23 des jeweiligen Betätigungsarms 21 als Anschlag einsitzt. In der der Matrize 3 zugewandten Oberfläche der Stempelhalterung 2 ist eine sich entlang einer Kreislinie erstreckende Verriegelungsnut 24 ausgebildet, die zur Aufnahme einer Verriegelungsfeder 25 vorgesehen ist, welche an den Betätigungsarmen 21 ausgebildet ist und sich mit Fortsetzungen über die Oberfläche der Matrizenunterseite 26 erstreckt. Der Stempel 8 und die Werkstückshalterung 5 können wahlweise mit einem Zentrieransatz 27 bzw. einer Zentriervertiefung 28 ausgebildet sein.

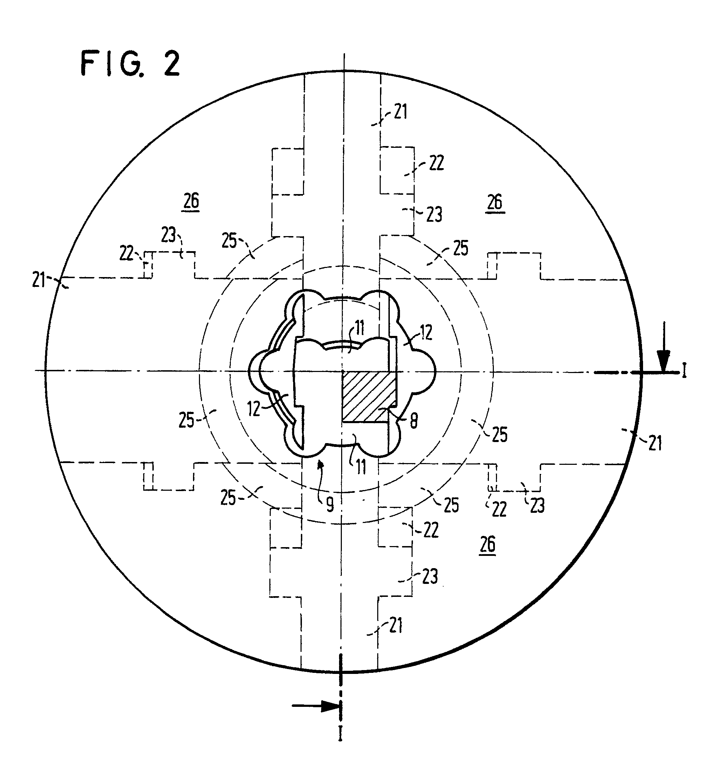

Die Funktion des erfindungsgemäßen Spreizwerkzeugs ist in Verbindung mit dem beschriebenen Schmiedegesenk wie folgt: Als erstes wird der vorgeschmiedete äußere Gelenkkörper 1, dessen freies Ende um ein bestimmtes Maß nach außen absteht, an der Werkstückshalterung 5 befestigt und bis zu der in Fig. 1 gezeigten unteren Endstellung verfahren. Der Formring 4 und der Stempel 8 befinden sich dabei in einer nicht gezeigten oberen Betätigungsarme 21 der Segmente 11, 12 eine radial innere Stellung einnehmen, so daß die Spreizhülse 9 ungespreizt ist. Diese radial innere Stellung ist in Fig. 2 für die im dritten und vierten Quadranten gezeigten Betätigungsarme 21 für die jeweiligen Segmente 11, 12 dargestellt. Fig. 3 zeigt die Spreizhülse 9 im ungespreizten Zustand, wobei die inneren Segmente 11 mit ihren die seitlichen Begrenzungsflächen 17 umfassenden Randbereichen in den Nuten 19 der äußeren Segmente 12 einsitzen. Dies ist auch im vierten Quadranten der in Fig. 2 gezeigten Spreizhülse dargestellt.

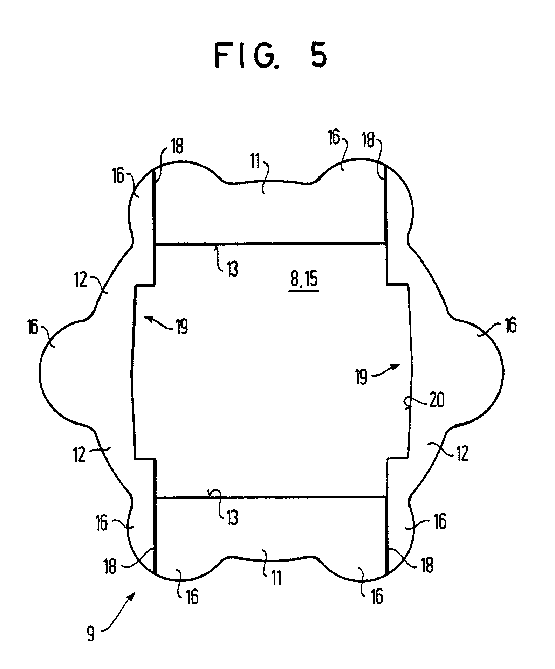

Mittels der Antriebseinrichtung werden die Betätigungsarme 21 der äußeren Segmente 12 radial nach außen bewegt, bis sie mit ihren seitlichen Vorsprüngen 23 an den radial äuberen Begrenzungsflächen der Aussparungen 22 anliegen. Die äußeren Segmente 12 befinden sich nun in der in Fig. 2 im ersten und zweiten Quadranten der Spreizhülse sowie in Fig. 4 gezeigten radial äußeren Stellung, in der ihre Nuten 19 die inneren Segmeoe 11 freigeben, woraufhin diese in gleicher Weise wie die äußeren Segmente 12 in ihre radial äußere Stellung verfahren werden. Die Spreizhülse 9 befindet sich nun im gespreizten Zustand, in dem ihre Segmente 11, 12 die Aufnahmeöffnung 15 begrenzen und die Verriegelungsfedern 25 der Betätigungsarme 21 zusammen mit den Verriegelungsfedern auf der Matrizenunterseite 26 einen geschlossenen Kreis beschreiben. Diese gespreizte Stellung der Spreizhülse 9 ist in Fig. 5 sowie im zweiten Quadranten der Spreizhülse in Fig. 2 dargestellt.

Nun wird durch entsprechende Bewegung der Stempelhalterung 2 der Stempel 8 in die Aufnahmeöffnung 15 eingefahren, bis die Stempelhalterung 2 auf die Unterseite 26 der Matrize 3 auftrifft und ihre Verriegelungsnut 24 mit der kreisringförmig verlaufenden Verriegelungsfeder 25 in Eingriff gelangt.

Nun wird der Formring 4 von seiner oberen Endstellung in die in Fig. 1 gezeigte untere Endstellung abgesenkt. Während dieser Bewegung preßt der Formring 4 den radial nach außen ragenden freien Randbereich des Werkstücks 1 unter Bildung der Hinterschneidung radial nach innen, wobei der Stempel 8 als Widerlager für die Spreizhülse 9 dient, um die während der Verformung des Werkstücks 1 auftretenden Kräfte aufzunehmen. Während dieses Verformungsvorganges kann kein flüssiges oder plastisches Werkstücksmaterial in die die inneren und äußeren Segmente 11, 12 trennenden Trennfugen 18 eindringen, da sie ständig, d.h. auch im gespreizten Zustand der Spreizhülse 9, geschlossen sind. Auf diese Weise wird eine Gratbildung an der Werkstücks-Innenkontur sicher verhindert und ein Werkstück 1 hergestellt, das keine weitere Nachbearbeitung erfordert. Das fertiggestellte Werkstück 1 ist in Fig. 1 Gezeigt und kann nach Durchführung der vorbeschriebenen Verfahrensschritte in umgekehrter Reihenfolge von der Werkstückshalterung 5 abgenommen werden.

Das erfindungsgemäße Spreizwerkzeug ist als Widerhalter oder Formungselement für sämtliche Formungseinrichtungen für hohle Werkstücke mit oder ohne Hinterschneidung und unter Verwendung flüssigen oder plastisch verformbaren Werkstücksmaterials geeignet.

## Ansprüche

1. Spreizwerkzeug für eine Formungseinrichtung, insbesondere ein Schmiedegesenk, zur Herstellung hohler Werkstücke, mit einem Stempel und einer dessen freien Endabschnitt formschlüssig in einer Aufnahmeöffnung aufnehmenden Spreizhülse, die aus radial bewegbaren, durch Trennfugen getrennten Segmenten besteht und deren Außenkontur der Innenkontur des Werkstückes entspricht, wobei die Trennfugen von aneinander angrenzenden Begrenzungsflächen benachbarter Segmente gebildet sind,
dadurch **gekennzeichnet,**
daß eine gerade Anzahl von wenigstens vier Segmenten (11,12) vorgesehen ist und die Trennfugenebenen außerhalb der Längsmittelachse der Spreizhülse (9) derart verlaufen, daß die Trennfugen (18) bei gespreizter Spreizhülse (9) im Bereich deren Außenkontur geschlossen sind.

2. Spreizwerkzeug nach Anspruch 1,
dadurch **gekennzeichnet,**
daß jedes zweite Segment als inneres Segment (11) zwischen jeweils zwei benachbarten äußeren Segmenten (12) angeordnet ist, daß die Trennfugen (18) beidseits jedes inneren Segmentes (11) bei Betrachtung des Spreizhülsen-Querschnitts parallel zueinander und entlang von inneren, der Aufnahmeöffnung (15) zugewandten Begrenzungsflächen (14) der jeweils benachbarten äußeren Segmente (12) verlaufen, und daß diese inneren Begrenzungsflächen (14) unter Bildung je einer Nut (19) zur Aufnahme der inneren Segmente (11) bei ungespreizter Spreizhülse (9) zurückgesetzt sind.

3. Spreizwerkzeug nach Anspruch 2,
dadurch **gekennzeichnet,**
daß der Nutgrund (20) zur Nutgrundmitte hin abfallend ausgebildet ist.

4. Spreizwerkzeug nach wenigstens einem der vorhergehenden Ansprüche,
dadurch **gekennzeichnet,**
daß der Stempel (8) und die von den inneren Begrenzungsflächen (13, 14) der inneren und äußeren Segmente (11, 12) umschriebene Aufnahmeöffnung (15) einen im wesentlichen rechteckigen Querschnitt aufweisen.

5. Spreizwerkzeug nach wenigstens einem der vorhergehenden Ansprüche,
dadurch **gekennzeichnet,**
daß sich der Stempel (8) und die Aufnahmeöffnung (15) in Richtung zum freien Stempelende verjüngen.

6. Spreizwerkzeug nach wenigstens einem der vorhergehenden Ansprüche,
dadurch **gekennzeichnet,**
daß die inneren und die äußeren Segmente (11, 12) an der Formungseinrichtung radial verschiebbar befestigt sind.

7. Spreizwerkzeug nach wenigstens einem der Ansprüche 1 bis 4 und 6,

dadurch **gekennzeichnet,**

daß der Stempel (8) und die Aufnahmeöffnung (15) über ihre Gesamtlänge gleiche Querschnittsabmessungen aufweisen.

8. Spreizwerkzeug nach wenigstens einem der vorhergehenden Ansprüche,

dadurch **gekennzeichnet,**

daß jedes der inneren und der äußeren Segmente (11, 12) mit einem daran angreifenden, durch eine Antriebseinrichtung radial verschiebbaren Betätigungsarm (21) versehen ist.

9. Spreizwerkzeug nach Anspruch 8,

dadurch **gekennzeichnet**

daß die Betätigungsarme (21) in Führungen in einer Matrize (3) der Formungseinrichtung geführt sind.

10. Spreizwerkzeug nach Anspruch 9,

dadurch **gekennzeichnet**

daß die Führungsflächen der Führungen je eine die Radialbewegung der Segmente (11, 12) begrenzende nutförmige Aussparung (22) und die Betätigungsarme (21) je einen in der Aussparung (22) einsitzenden seitlichen Vorsprung (23) als Anschlag aufweisen.

11. Spreizwerkzeug nach wenigstens einem der Ansprüche 8 bis 10,

dadurch **gekennzeichnet**

daß jeder Betätigungsarm (21) an seiner Oberseite eine Verriegelungsfeder (25) oder -nut für den Eingriff mit einer Verriegelungsnut (24) oder -feder einer der Matrize (3) gegenüberliegenden Stempelhalterung (2) aufweist.

12. Spreizwerkzeug nach Anspruch 11,

dadurch **gekennzeichnet**

daß die Verriegelungsfedern (25) oder -nuten sich kreisförmig über die gesamte Oberfläche der Matrize (3) fortsetzen.

# FIG. 1

# FIG. 2

EP 0 421 143 A2

# FIG. 3

# FIG. 4

# FIG. 5